## Europäisches Patentamt

## European Patent Office

## Office européen des brevets

(11) Veröffentlichungsnummer: **0 503 241 B1**

(12) **EUROPÄISCHE PATENTSCHRIFT**

(45) Veröffentlichungstag der Patentschrift: **07.09.94**

(21) Anmeldenummer: **92100958.5**

(22) Anmeldetag: **22.01.92**

(51) Int. Cl.5: **B29B 13/06**, C08J 9/22,
//C08L25:04

(54) **Verfahren zum Trocknen kleinteiliger, expandierbarer Styrolpolymerisate.**

(30) Priorität: **14.02.91 DE 4104418**

(43) Veröffentlichungstag der Anmeldung:
**16.09.92 Patentblatt 92/38**

(45) Bekanntmachung des Hinweises auf die
Patenterteilung:
**07.09.94 Patentblatt 94/36**

(84) Benannte Vertragsstaaten:
**AT BE DE ES FR GB IT NL**

(56) Entgegenhaltungen:
**DE-A- 1 604 339**
**DE-A- 2 734 198**
**DE-A- 2 948 870**
**DE-A- 3 312 026**
**GB-A- 953 759**

(73) Patentinhaber: **BASF Aktiengesellschaft**
**Carl-Bosch-Strasse 38**
**D-67063 Ludwigshafen (DE)**

(72) Erfinder: **Hahn, Klaus, Dr.**
**In Buegen 9**
**W-6719 Kirchheim (DE)**
Erfinder: **Dietrich, Matthias**
**Duerrestrasse 1**
**W-6940 Weinheim (DE)**

**Beschreibung**

Die Erfindung betrifft ein verfahren zum Trocknen kleinteiliger, expandierbarer Styrolpolymerisate entsprechend dem Oberbegriff des Anspruchs 1.

Expandierbare Styrolpolymerisate werden großtechnisch durch Suspensionspolymerisation von Styrol in Wasser hergestellt. Dabei besitzt das nach Abtrennung der wäßrigen Phase erhaltene Perlpolymerisat üblicherweise eine Perlgröße von 0,3 bis 3 mm. Zur Erhöhung der Ausbeute können aus dem Suspensionsabwasser mit Hilfe eines Dekanters feinste Polymerisatteilchen (≦ 0,3 mm) abgetrennt werden, sog. Dekantermaterial. Diese Produkte haben jedoch einen Wassergehalt von insgesamt 1 bis 10 Gew.-% (Oberflächen- und Innenwasser), so daß bisher Dekantermaterial ausschließlich als Wiederauflöser in den Herstellungsprozeß zurückgeführt wird. Die Entwicklung einer daraus hergestellten, verkaufsfähigen Marke scheiterte bisher an der Aufarbeitung, insbesondere der Trocknung solcher Produkte, da auch nach der Entfernung der Oberflächenfeuchte Innenwasser aus den Perlen austritt und zu einer unbefriedigenden Rieselfähigkeit des Dekantermaterials führt. Es ergeben sich in der Folge, insbesondere bei der Lagerung der Produkte Agglomerate, durch die eine Verarbeitung der Styrolpolymerisate zu Schaumstoffen erheblich erschwert wird.

Mit der Erfindung soll ein verfahren geschaffen werden, welches zum Trocknen kleinteiliger, expandierbarer Styrolpolymerisate einer Teilchengröße von 0,02 bis 0,3 mm geeignet ist. Als Besonderheit ist zusätzlich gefordert, daß die Perlpolymerisatteilchen während ihrer Trocknung eine Oberflächenbeschichtung erhalten können.

Zur Lösung dieser Aufgabe werden die Maßnahmen nach Anspruch 1 vorgeschlagen.

Als Hauptkomponente enthalten die feinteiligen expandierbaren Produkte Polystyrol und/oder ein Styrolcopolymerisat mit mindestens 50 Gew.-%, vorzugsweise mindestens 80 Gew.-% einpolymerisiertem Polystyrol. Als Copolymere werden z.B. eingesetzt: α-Methylstyrol, kernhalogenierte Styrole, kernalkylierte Styrole, Acrylnitril, Ester der Acryl- oder Methacrylsäure von Alkoholen mit 1 bis 8 C-Atomen, N-vinylcarbazol und Maleinsäure (anhydrid).

Vorteilhaft kann das Polystyrol geringe Mengen eines Kettenverzweigers einpolymerisiert enthalten, d.h. einer Verbindung mit mehr als einer, vorzugsweise zwei Doppelbindungen, wie Divinylbenzol, Butadien oder Butandioldiacrylat. Der Verzweiger wird im allgemeinen in Mengen von 0,001 bis 0,05 Mol-%, bezogen auf Styrol, eingesetzt.

Im allgemeinen verwendet man Styrolpolymerisate mit Molekulargewichten und Molekulargewichtsverteilungen, wie sie in der EP-B 106 129 und der DE-A 39 21 148 beschrieben sind. Auch Mischungen verschiedener Styrolpolymerisate können verwendet werden, wie sie beispielsweise in der DE-A 39 01 329, 39 08 238 und 39 15 602 beschrieben sind.

Als Treibmittel enthalten die expandierbaren Styrolpolymerisate 0,5 bis 10, vorzugsweise 3 bis 8 Gew.-%, bezogen auf das Styrolpolymerisat, eines $C_3$- bis $C_6$-Kohlenwasserstoffs, wie Propan, n-Butan, Isobutan, n-Pentan, Isopentan, Neopentan und/oder Hexan. Vorzugsweise wird ein Pentan-Isomerengemisch verwendet.

Die expandierbaren Styrolpolymerisate können außerdem Hilfsstoffe, wie Pigmente, Farbstoffe, Stabilisatoren, Füllstoffe, Flammschutzmittel, Synergisten, Keimbildner, Gleitmittel und dergleichen in üblichen wirksamen Mengen enthalten.

Als Zusatzstoffe sind auch Poly-(2,6-dimethyl)-1,4-phenylenether und Poly-1,4-phenylensulfid gemäß DE-A 39 04 370 und DE-A 39 24 868 geeignet. Diese Zusätze bewirken eine Erhöhung der Wärmeformbeständigkeit der Schaumstoffe. Geeignete Zusatzstoffe sind auch styrollösliche Elastomere entsprechend der DE-A 39 15 602, die die Elastizität des Schaumstoffs erhöhen.

Die expandierbaren Styrolpolymerisate liegen im allgemeinen in Perlform vor, wobei der mittlere Perldurchmesser 0,02 bis 0,3 mm, insbesondere 0,05 bis 0,2 mm beträgt. Für ihre Herstellung wird Styrol, ggfs. unter Zusatz weiterer Comonomerer in wäßriger Suspension in Gegenwart eines üblichen Suspensionsstabilisators mittels radikalbildender Initiatoren polymerisiert.

Vorteilhaft setzt man bei der Polymerisation einen Regler und/oder einen Kettenverzweiger zu, beispielsweise in Mengen von 0,001 bis 3 Gew.-%, bezogen auf Styrol. Das Treibmittel und ggfs. die Zusatzstoffe können dabei vor Beginn der Polymerisation vorgelegt oder im Laufe der Polymerisation bzw. nach beendeter Polymerisation dem Ansatz zugefügt werden. Die erhaltenen perlförmigen Styrolpolymerisate mit einer Perlgröße von 0,3 bis 3 mm werden nach beendeter Polymerisation nach üblichen Verfahren von der wäßrigen Phase abgetrennt, gewaschen, getrocknet und ggfs. beschichtet.

Aus dem Suspensionsabwasser werden anschließend mit Hilfe eines Dekanters die Polymerisatteilchen von der Hauptmenge des Wassers befreit und die Perlpolymerisate von 0,02 bis 0,3 mm unter der Einwirkung eines gasförmigen Mediums getrocknet. Erfindungsgemäß erfolgt die Trocknung in zwei Stufen, wobei in der ersten Stufe im wesentlichen, die Oberflächenfeuchtigkeit entfernt wird und dann in der zweiten Stufe der Feuchtigkeitsgehalt der Perlpolymerisate bis auf Restfeuchten von weniger als 0,25 %, insbesondere weniger als 0,15 % reduziert wird. Hierzu werden das Perlpolymerisat und ein auf eine Temperatur von zweckmäßig 45°C bis 120°C, vorteilhaft 70°C bis 100°C erwärmter erster Gasstrom gemeinsam durch einen Stromtrockner, beispielsweise ein Steigrohr gefördert. Dabei hat es sich insgesamt als günstig erwiesen, wenn das Verhältnis zwischen Gas und Perlpolymerisat 2 bis 40 kg/kg, insbesondere 4 bis 10 kg/kg beträgt. Bei Geschwindigkeiten des ersten Gasstromes von etwa 4 bis 30 m/sec ergeben sich in dem Stromtrockner Verweilzeiten des Styropors im Sekundenbereich.

Am Auslaß des Stromtrockners wird das Perlpolymerisat von dem ersten Gas-Strom getrennt und unmittelbar anschließend in ein Wirbelbett überführt, in dem in einer zweiten Stufe die Trocknung bis auf die gewünschte Restfeuchte erfolgt. Dies geschieht mit Hilfe eines zweiten Gasstromes, der vorzugsweise im Gegenstrom zu dem Perlpolymerisat geführt ist. Die Temperatur dieses zweiten Gasstromes beträgt im allgemeinen 0°C bis 75°C, zweckmäßig 15°C bis 60°C, seine Geschwindigkeit etwa 0,05 bis 2 m/sec. Unter diesen Bedingungen ergeben sich Verweilzeiten des Perlpolymerisats in dem Wirbelbett zwischen 1 und 30 Minuten.

Als gasförmiges Medium für die Trocknung der Perlpolymerisate kommen Luft oder Stickstoff in Betracht, wobei Luft für die erste Trocknungsstufe und Stickstoff für die zweite Trocknungsstufe besonders bevorzugt wird.

Nach einem weiteren Merkmal der Erfindung wird zusammen mit dem zweiten Gasstrom ein Beschichtungsmittel für das Perlpolymerisat in das Wirbelbett eingeleitet. Es können sowohl flüssige als auch pulverförmige Beschichtungsmittel zudosiert werden. Geeignete Beschichtungsmittel sind beispielsweise Antistatika und beim vorschäumen antiverklebend wirkende Stoffe, wie Metallstearate, Metallcarbonate, Metalloxide, feinteilige kieselsäuren ($SiO_2$) oder Glycerinester. Die Anteile der Beschichtungsmittel betragen 0,1 bis 3 Gew.-%, vorzugsweise 0,5 bis 1,5 Gew.-% und insbesondere 0,7 bis 1,2 Gew.-%. Die Dosierung der Beschichtungsmittel erfolgt während der Trocknung im Stromtrockner und/oder im Wirbelbett.

Die auf diese Weise erhaltenen Styrolpolymerisate sind rieselfähig und lassen sich problemlos in handelsüblichen Vorschäumapparaturen verschäumen. Daraus hergestellte Schaumstoffpartikel weisen im allgemeinen eine Dichte von etwa 0,01 bis etwa 0,1 $g/cm^3$ auf. Sie finden Verwendung u.a. in der Bauindustrie, z.B. als Zuschlagstoff für Dämmputze.

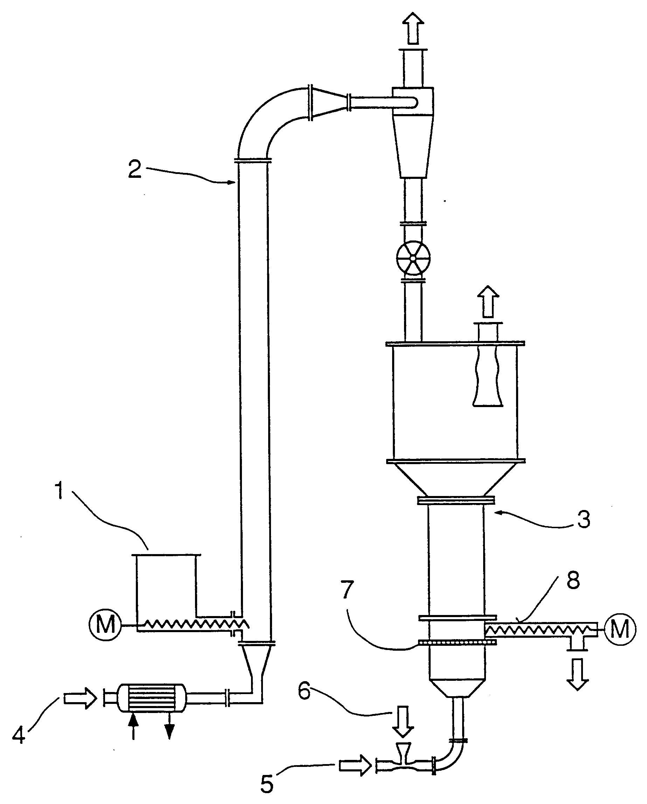

Die Erfindung wird nachfolgend unter Hinweis auf die Zeichnung anhand eines Ausführungsbeispieles näher erläutert. Die in dem Beispiel genannten Teile sind Gewichtsteile.

In einem druckfesten Rührgefäß wurde eine Mischung aus 150 Teilen Wasser, 0,1 Teilen Natriumpyrophosphat, 100 Teilen Styrol, 0,45 Teilen Dibenzoylperoxid, 0,15 Teilen tert.-Butylperbenzoat und 7 Teilen Pentan unter Rühren auf 90°C erhitzt. Nach 2 Stunden bei 90°C wurden 4 Teile einer 10 %igen wäßrigen Lösung von Polyvinylpyrrolidon als Suspensionsstabilisator zugefügt. Dann wurde 2 Stunden bei 90°C, anschließend 2 Stunden bei 100°C und schließlich 2 Stunden bei 120°C gerührt. Nach dem Abkühlen auf Raumtemperatur wurde zunächst das Perlpolymerisat mit einem Teilchendurchmesser von 0,3 bis 3 mm abgetrennt.

Aus dem Suspensionsabwasser wurden anschließend mit einem Dekanter (1) feinste Polymerisatteilchen einer Teilchengröße von 0,04 bis 0,3 mm isoliert. Die Gesamtwasserfeuchte dieses Dekantermaterials betrug ca. 4 Gew.-%. Nach Entfernung des Oberflächenwassers mittels Stromtrockner (2) wurden die Produkte im Wirbelbett (3) getrocknet und mit Metallstearaten beschichtet. Dabei wurde ein erster Gasstrom bei (4) dem Stromtrockner und ein zweiter Gasstrom bei (5) dem Wirbelbett zugeführt. Die Einleitung der Metallstearate zur Beschichtung der Perlpolymerisate erfolgte bei (6). Oberhalb des Wirbelboden (7) wurde das gekühlte und getrocknete Perlpolymerisat mit Hilfe einer Schnecke (8) ausgetragen.

Die Versuchsbedingungen sind in der Tabelle zusammengestellt.

Tabelle

|  |  |  | Versuchsbed. |
|---|---|---|---|
| Stromtrockner | Produkt-Eintrittemperatur | °C | 20 |
|  | Produkt-Eintrittsfeuchte (Wasser) | % | 4 |
|  | Produkt-Austrittsfeuchte (Wasser) | % | 0,2 |
|  | Verhältnis: 1. Gas-str./Pr.-strom | kg/kg | 6 |
|  | Gas-Eintrittstemperatur | °C | 75 |
|  | Gas-Art | - | Luft |
| Wirbelbett | Produkt-Eintrittemperatur | °C | 50 |
|  | Produkt-Eintrittsfeuchte (Wasser) | kg/kg | 0,2 |
|  | Produkt-Austrittsfeuchte (Wasser) | kg/kg | 0,1 |
|  | Verhältnis: 2. Gas-str./Pr.-strom | kg/kg | 0,3 |
|  | Gas-Eintrittstemperatur | °C | 20 |
|  | Gas-Geschwindigk. (Wirbelb.) | m/s | 0,3 |
|  | Gas-Art | - | Stickstoff |
|  | Beschichtung mit Feststoffen | - | ja |
|  | Beschichtung mit Flüssigkeiten | - | ja |

**Patentansprüche**

1. Verfahren zum Trocknen kleinteiliger, expandierbarer Styrolpolymerisate einer Teilchengröße von 0,02 bis 0,3 mm, bei dem das als Aufschlämmung in Wasser vorliegende Perlpolymerisat von der Hauptmenge des Wassers befreit und unter der Einwirkung eines gasförmigen Mediums getrocknet wird, dadurch gekennzeichnet, daß das Perlpolymerisat und ein auf eine Temperatur von etwa 45°C bis etwa 120°C erwärmter erster Gasstrom gemeinsam durch einen Stromtrockner gefördert werden, wobei das Verhältnis zwischen Gas und Perlpolymerisat 2 bis 40 kg/kg beträgt, das Perlpolymerisat von dem ersten Gasstrom getrennt, unmittelbar anschließend in ein Wirbelbett überführt und mit Hilfe eines zweiten Gasstromes einer Temperatur von etwa 0°C bis etwa 75°C gekühlt und getrocknet wird.

2. Verfahren nach Anspruch 1, dadurch gekennzeichnet, daß die Geschwindigkeit des ersten Gasstromes in dem Stromtrockner etwa 4 bis 30 m/sec beträgt.

3. Verfahren nach Anspruch 1, dadurch gekennzeichnet, daß die Geschwindigkeit des zweiten Gasstromes in dem Wirbelbett etwa 0,05 bis 2 m/sec beträgt.

4. Verfahren nach Anspruch 1, dadurch gekennzeichnet, daß als gasförmiges Medium Luft oder Stickstoff verwendet wird.

4

**5.** Verfahren nach einem oder mehreren der vorhergehenden Ansprüche, dadurch gekennzeichnet, daß in das Wirbelbett ein Beschichtungsmittel für das Perlpolymerisat eingeleitet wird.

**6.** Verfahren nach Anspruch 5, dadurch gekennzeichnet, daß das Beschichtungsmittel ein flüssiges und/oder pulverförmiges Antiverklebungsmittel ist.

**Claims**

**1.** A process for the drying of a finely divided, expandable styrene polymer having a particle size of from 0.02 to 0.3 mm, in which the bead polymer, in the form of a slurry in water, is freed from the majority of the water and dried with the aid of a gaseous medium, which comprises jointly conveying the bead polymer and a first gas stream, warmed to from about 45 to about 120°C, through a flow dryer, the ratio between the gas and the bead polymer being from 2 to 40 kg/kg, separating the bead polymer from the first gas stream, immediately transferring the bead polymer into a fluidized bend, and, with the aid of a second gas stream, cooling the polymer to from about 0 to about 75°C and drying the polymer.

**2.** A process as claimed in claim 1, wherein the flow rate of the first gas stream in the flow dryer is from about 4 to 30 m/sec.

**3.** A process as claimed in claim 1, wherein the flow rate of the second gas stream in the fluidized bed is from about 0.05 to 2 m/sec.

**4.** A process as claimed in claim 1, wherein the gaseous medium used is air or nitrogen.

**5.** A process as claimed in one or more of the preceding claims, wherein a coating composition for the bead polymer is introduced into the fluidized bed.

**6.** A process as claimed in claim 5, wherein the coating composition is a liquid and/or pulverulent antiadhesive.

**Revendications**

**1.** Procédé de séchage de polymérisats de styrène finement répartis, expansibles, d'une taille particulaire de 0,02 à 0,3 mm, dans lequel le polymérisant se présentant comme suspension dans de l'eau est débarrassé de la majeure partie de l'eau et est séché sous l'action d'un milieu gazeux, caractérisé en ce que le polymérisat en suspension et un premier courant de gaz, chauffé à une température d'à peu près 45°C jusqu'à à peu près 120°C, sont véhiculés conjointement à travers un séchoir pneumatique, le rapport entre gaz et le polymérisat étant de 2 à 40 kg/kg, le polymérisat étant séparé du premier courant de gaz, puis directement ensuite transféré dans un lit tourbillonnaire et refroidi à l'aide d'un deuxième courant de gaz, à une température d'à peu près 0°C à à peu près 750°C et séché.

**2.** Procédé selon la revendication 1, caractérisé en ce que la vitesse du premier courant de gaz dans le séchoir est d'à peu près 4 à 30 m/s.

**3.** Procédé selon la revendication 1, caractérisé en ce que la vitesse du deuxième courant de gaz dans le lit tourbillonnaire est d'à peu près 0,05 à 2 m/s.

**4.** Procédé selon la revendication 1, caractérisé en ce que l'on utilise comme milieu gazeux de l'air ou de l'azote.

**5.** Procédé selon l'une ou plusieurs des revendications précédentes, caractérisé en ce que l'on introduit dans le lit tourbillonnaire un agent d'enduction pour le polymérisat.

**6.** Procédé selon la revendication 5, caractérisé en ce que l'agent d'enduction est un anti-collage liquide et/ou pulvérulent.